# EUROPEAN PATENT APPLICATION

(11) **EP 4 310 024 A1**
(43) Date of publication of application: **24.01.2024**
(21) Application number: 22771077.9
(22) Date of filing: 28.02.2022
(51) Int. Cl.: B65G 1/00

(54) **SYSTEM AND PROGRAM**

(30) Priority: 18.03.2021 JP 2021044911
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/008269
(87) International publication number: WO 2022/196323

(57) **Abstract**

According to an embodiment, a system includes an information processing device, a sorter, and an automated guided vehicle. The sorter includes trays and a feeding mechanism. The feeding mechanism feeds each of the articles from the trays to a first vessel or the automated guided vehicle. The automated guided vehicle includes a loading mechanism and a moving mechanism. The loading mechanism is loaded with the article and feeds the article to a second vessel. The information processing device includes a communication unit and a processor. The processor executes acquiring sorting destination information indicating sorting destinations of the articles from the external device via the communication unit, specifying the first vessel or the second vessel based on the sorting destination information, transmitting a control signal to cause the sorter to feed the article to the first vessel via the communication unit.

## Description

### FIELD

Embodiments described herein relate generally to a system and a program.

### BACKGROUND

Systems feeding articles to chutes using sorters have been provided. Such a system sorts articles to chutes according to sorting destinations of the articles.

In conventional art, in a case where the number of sorting destinations is larger than the number of chutes, the system is required to sort the articles to be sorted to a plurality of sorting destinations to predetermined chutes and thereafter sort the articles again by workers.

### CITATION LIST

### PATENT LITERATURE

Patent Literature 1: Japanese Patent Application Publication No. 2020-132330

### SUMMARY

### TECHNICAL PROBLEM

To solve the problem described above, a system and a program capable of effectively sorting articles are provided.

### SOLUTION TO PROBLEM

According to an embodiment, a system includes an information processing device, a sorter, and an automated guided vehicle. The sorter includes trays and a feeding mechanism. The trays are loaded with articles. The feeding mechanism feeds each of the articles from the trays to a first vessel or the automated guided vehicle. The automated guided vehicle includes a loading mechanism and a moving mechanism. The loading mechanism is loaded with the article and feeds the article to a second vessel. The moving mechanism moves the loading mechanism. The information processing device includes a communication unit and a processor. The communication unit communicates with an external device, the sorter, and the automated guided vehicle. The processor executes acquiring sorting destination information indicating sorting destinations of the articles from the external device via the communication unit, specifying the first vessel or the second vessel as a sorting vessel to be fed with the article based on the sorting destination information, transmitting a control signal to cause the sorter to feed the article to the first vessel via the communication unit, if the first vessel is specified, and transmitting a control signal to cause the sorter to feed the article to the automated guided vehicle via the communication unit, and transmitting a control signal to cause the automated guided vehicle to feed the article to the second vessel via the communication unit, if the second vessel is specified.

### BRIEF DESCRIPTION OF THE DRAWINGS

FIG. 1 is a block diagram illustrating a configuration example of a sorting system according to an embodiment.
FIG. 2 is a block diagram illustrating a configuration example of a control system of the sorting system according to the embodiment.
FIG. 3 is a block diagram illustrating a configuration example of a sorting control device according to the embodiment.
FIG. 4 is a block diagram illustrating a configuration example of a sorter control device according to the embodiment.
FIG. 5 is a block diagram illustrating a configuration example of an AGV control device according to the embodiment.
FIG. 6 is a perspective view of an AGV according to the embodiment.
FIG. 7 is a top view of the AGV according to the embodiment.
FIG. 8 is a side view of the AGV according to the embodiment.
FIG. 9 is a block diagram illustrating a configuration example of the AGV according to the embodiment.
FIG. 10 is a block diagram illustrating an operation example of the AGV according to the embodiment.
FIG. 11 is a diagram illustrating a structure example of a first vessel according to the embodiment.
FIG. 12 is a diagram illustrating a modification of the first vessel according to the embodiment.
FIG. 13 is a diagram illustrating a placement example of a sorter and the first vessel according to the embodiment.
FIG. 14 is a diagram illustrating an operation example of the sorter according to the embodiment.
FIG. 15 is a diagram illustrating an operation example of the sorter according to the embodiment.
FIG. 16 is a diagram illustrating a structure example of sorting destination information according to the embodiment.
FIG. 17 is a diagram illustrating an operation example of the sorting system according to the embodiment.
FIG. 18 is a diagram illustrating an operation example of the sorting system according to the embodiment.
FIG. 19 is a flowchart illustrating an operation example of the sorting system according to the embodiment.

### DETAILED DESCRIPTION

An embodiment will now be explained hereinafter with reference to drawings.

A sorting system according to the embodiment sorts articles to sorting destinations. The sorting system feeds articles to vessels corresponding to the sorting destinations using a sorter and an automated guided vehicle (AGV). The sorting system directly feeds the articles from the sorter to the vessels. The sorting system also transfers the articles from the sorter to the AGV, and thereafter feeds the articles from the AGV to the vessels.

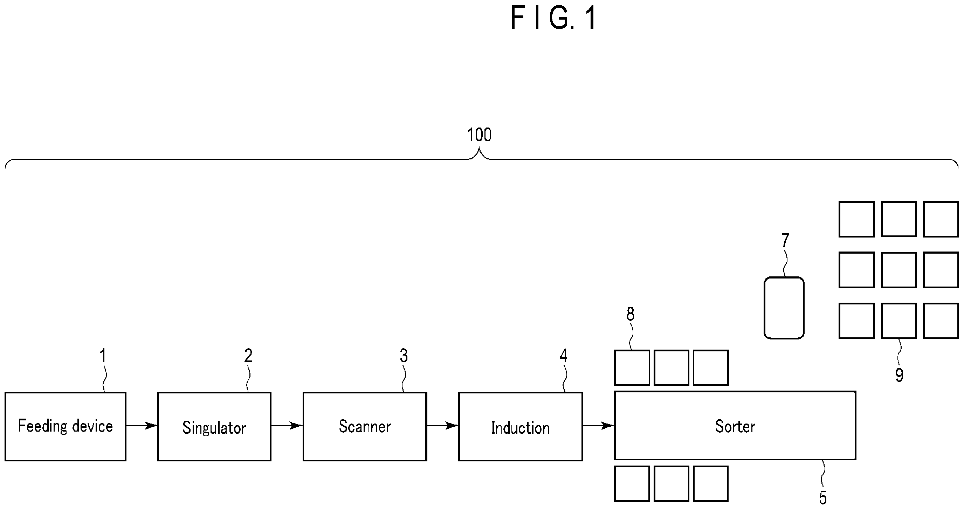

FIG. 1 illustrates a configuration example of a sorting system 100 according to the embodiment. As illustrated in FIG. 1, the sorting system 100 includes a feeding device 1, a singulator 2, a scanner 3, an induction 4, a sorter 5, an AGV 7, a first vessel 8, a second vessel 9, and the like.

Herein, the sorting system 100 conveys articles in the order of the feeding device 1, the singulator 2, the scanner 3, the induction 4, and the sorter 5.

The feeding device 1 feeds articles to the sorting system 100. For example, the feeding device 1 receives feeding of articles from the worker or a robot, or the like. The feeding device 1 feeds the fed articles to the singulator 2.

The singulator 2 aligns the fed articles in a predetermined direction. For example, the singulator 2 is formed of a conveyor and the like. The singulator 2 pushes the articles against a wall surface with a conveyor or the like to align the articles in the predetermined direction.

The scanner 3 reads codes attached to the articles. The codes are acquired by encoding IDs to identify the articles. The scanner 3 may read character strings of the IDs attached to the articles by OCR (Optical Character Recognition) or the like.

In this example, the scanner 3 reads IDs from codes of the articles aligned by the singulator 2.

The induction 4 feeds the articles to the sorter 5. The induction 4 may feed the articles to the sorter 5 using a conveyor or the like, or may feed the articles to the sorter 5 by the workers.

The sorter 5 sorts the fed articles to chutes. In this example, the sorter 5 is formed of trays, pushers, and the like. The sorter 5 conveys the articles placed on the trays. At a timing at which the tray reaches a position in front of a predetermined chute, the sorter 5 pushes the article out of the tray to the chute using the pusher.

The pushers push the articles to specific chutes according to the sorting destinations of the articles. Each of the pushers is positioned in a direction opposite to a direction of pushing the article and before a position in which the induction 4 places the article on the tray.

The sorter 5 feeds the articles to the first vessel 8 and the AGV 7 from the chutes. Specifically, the sorter 5 directly feeds the articles to the first vessel 8 or loads the articles onto the AGV 7.

The sorter 5 may be formed of trays and pushers, may be formed of a cross belt, or another mechanism. In this example, the sorter 5 including trays and pushers is explained as an example.

The first vessel 8 is a vessel to be directly fed with the articles from the sorter 5. The first vessel 8 is placed adjacent to the sorter 5. The first vessel 8 is placed in a position (receiving position) in which the first vessel 8 can receive the articles from the chute of the sorter 5.

As another example, the first vessel 8 is fed with the articles from the AGV 7. For example, the first vessel 8 has structure enabling feeding of the article by the AGV 7 from a surface thereof opposed to the sorter 5.

For example, the first vessel 8 is a cage cart or the like.

The first vessel 8 will be described in detail later.

In this example, the sorting system 100 includes a plurality of first vessels 8.

The second vessel 9 is a vessel to be fed with the articles from the AGV 7. An upper part or a side part of the second vessel 9 is opened such that the AGV 7 can feed the articles thereto. For example, the second vessel 9 is a cage cart or the like. The second vessel 9 may have the same structure as that of the first vessel 8.

The second vessel 9 is placed in a position distant from the sorter 5 by a predetermined distance. Specifically, the second vessel 9 is placed in a position in which the sorter 5 cannot directly feed the articles thereto. The sorting system 100 includes a plurality of second vessels 9.

The AGV 7 is an automatic traveling vehicle carrying the article loaded onto it. The AGV 7 receives the article from the sorter 5. The AGV 7 waits in a position in which the AGV 7 can receive the article from the chute of the sorter 5. In response to reception of the article, the AGV 7 moves to a position (feeding position) in which the AGV 7 can feed the article to the first vessel 8 or the second vessel 9. In response to moving to the position, the AGV 7 feeds the article to the first vessel 8 or the second vessel 9.

The AGV 7 will be described in detail later.

The following is an explanation of a control system of the sorting system 100.

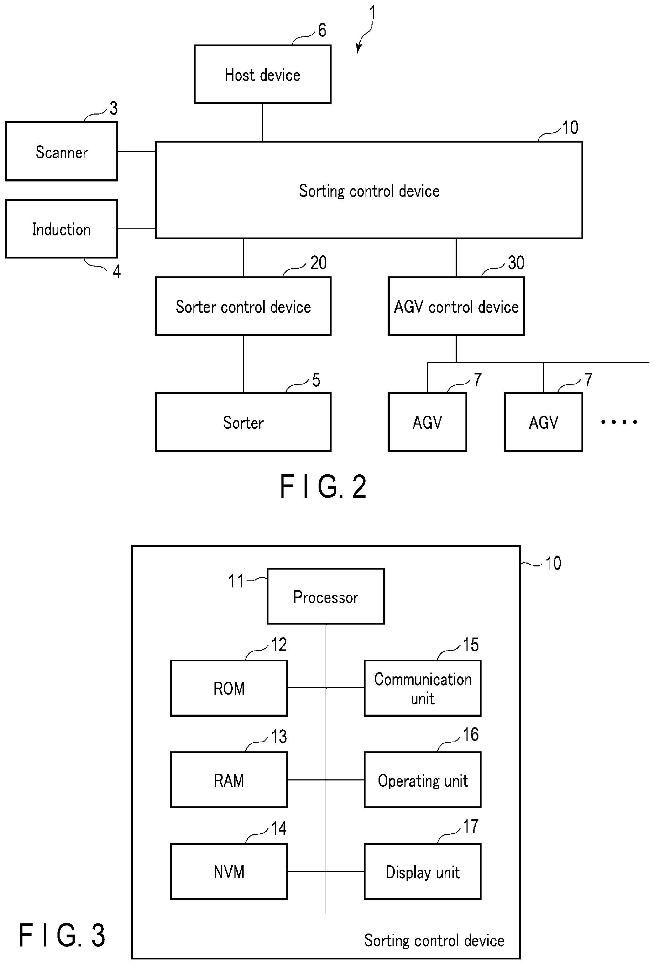

FIG. 2 illustrates a control system of the sorting system 100. As illustrated in FIG. 2, the sorting system 100 includes the scanner 3, the induction 4, the sorter 5, a host device 6, the AGV 7, a sorting control device 10, a sorter control device 20, an AGV control device 30, and the like.

The sorting control device 10 (information processing device) is connected to the scanner 3, the induction 4, the host device 6, the sorter control device 20, and the AGV control device 30. The sorter control device 20 is connected to the sorter 5. The AGV control device 30 is connected to the AGV 7.

The host device 6 (external device) transmits sorting destination information indicating the articles and sorting destinations (destinations) of the articles to the sorting control device 10. The sorting destination information will be described in detail later.

For example, the host device 6 is a WMS (Warehouse Management System). For example, the host device 6 is formed of a personal computer or the like.

The sorting control device 10 controls the sorter 5 and the AGV 7 in accordance with the sorting destination information from the host device 6. The sorting control device 10 controls the sorter 5 through the sorter control device 20. The sorting control device 10 also controls the AGV 7 through the AGV control device 30. For example, the sorting control device 10 is a WES (Warehouse Execution System). The sorting control device 10 will be described in detail later.

The sorter control device 20 controls the sorter 5 in accordance with a control signal from the sorting control device 10. The sorter control device 20 functions as a controller of the sorter 5. For example, the sorter control device 20 is a WCS (warehouse control system). The sorter control device 20 will be described in detail later.

The AGV control device 30 controls the AGV 7 in accordance with a control signal from the sorting control device 10. The AGV control device 30 functions as a controller of the AGV 7. For example, the AGV control device 30 is a WCS. The AGV control device 30 will be described in detail later.

The sorting system 100 may include any necessary constituent elements in addition to those illustrated in FIG. 1 and FIG. 2, or any specific constituent elements may be excluded from the sorting system 100.

The following is an explanation of the sorting control device 10.

FIG. 3 is a block diagram illustrating a configuration example of the sorting control device 10. As illustrated in FIG. 3, the sorting control device 10 includes a processor 11, a ROM 12, a RAM 13, a NVM 14, a communication unit 15, an operating unit 16, a display unit 17, and the like.

The processor 11, the ROM 12, the RAM 13, the NVM 14, the communication unit 15, the operating unit 16, and the display unit 17 are mutually connected via a data bus or the like.

The sorting control device 10 may include any necessary constituent elements in addition to those illustrated in FIG. 3, or any specific constituent elements may be excluded from the sorting control device 10.

The processor 11 has a function of controlling operations of the whole sorting control device 10. The processor 11 may include an internal cache and various interfaces. The processor 11 implements various types of processing by executing a program stored in advance in an internal memory, the ROM 12 or the NVM 14.

Part of various functions implemented by execution of the program by the processor 11 may be implemented by a hardware circuit. In this case, the processor 11 controls functions executed by the hardware circuit.

The ROM 12 is a nonvolatile memory storing a control program, control data, and the like in advance. The control program and the control data stored in the ROM 12 are preinstalled according to specifications of the sorting control device 10.

The RAM 13 is a volatile memory. The RAM 13 temporarily stores data being processed by the processor 11 and the like. The RAM 13 stores various application programs based on a command from the processor 11. The RAM 13 may also store data necessary for execution of application programs and execution results of the application programs.

The NVM 14 is a nonvolatile memory to which data is writable and rewritable. The NVM 14 is formed of, for example, a HDD (Hard Disk Drive), a SSD (Solid State Drive), or a flash memory. The NVM 14 stores a control program, applications, and various data according to the operation use of the sorting control device 10.

The communication unit 15 is an interface to communicate with the scanner 3, the induction 4, the host device 6, the sorter control device 20, the AGV control device 30, and the like. For example, the communication unit 15 is an interface to transmit and receive data to and from the scanner 3, the induction 4, the host device 6, the sorter control device 20, the AGV control device 30, and the like via a network. The communication unit 15 is connected to the sorter 5 via the sorter control device 20. The communication unit 15 is also connected to the AGV 7 via the AGV control device 30. For example, the communication unit 15 is an interface supporting wired or wireless LAN (Local Area Network) connection.

The communication unit 15 functions as an interface to control the sorter 5 and the AGV 7.

The communication unit 15 may be formed of an interface to communicate with the scanner 3, an interface to communicate with the induction 4, an interface to communicate with the host device 6, an interface to communicate with the sorter control device 20, and an interface to communicate with the AGV control device 30.

The operating unit 16 receives an input of various operations from the operator. The operating unit 16 transmits a signal indicating an input operation to the processor 11. The operating unit 16 may be formed of a touch panel.

The display unit 17 displays image data from the processor 11. For example, the display unit 17 is formed of a liquid crystal monitor. In a case where the operating unit 16 is formed of a touch panel, the display unit 17 may be formed as one unitary piece with the operating unit 16.

The following is an explanation of the sorter control device 20.

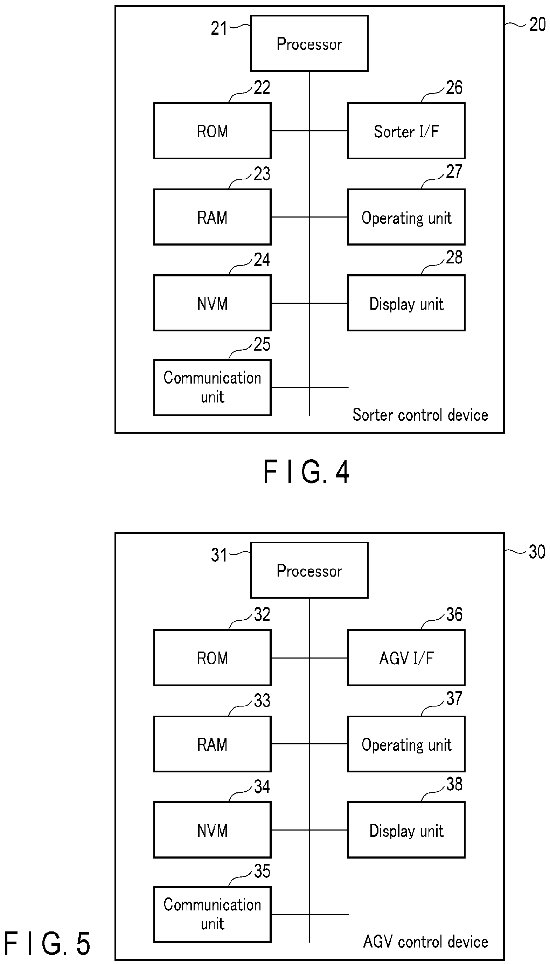

FIG. 4 is a diagram illustrating a configuration example of the sorter control device 20. As illustrated in FIG. 4, the sorter control device 20 includes a processor 21, a ROM 22, a RAM 23, a NVM 24, a communication unit 25, a sorter interface 26, an operating unit 27, a display unit 28, and the like.

The processor 21, the ROM 22, the RAM 23, the NVM 24, the sorter interface 26, the communication unit 25, the operating unit 27, and the display unit 28 are mutually connected via a data bus or the like.

The sorter control device 20 may include any necessary constituent elements in addition to those illustrated in FIG. 4, or any specific constituent elements may be excluded from the sorter control device 20.

The processor 21 has a function of controlling operations of the whole sorter control device 20. The processor 21 may include an internal cache and various interfaces. The processor 21 implements various types of processing by executing a program stored in advance in an internal memory, the ROM 22 or the NVM 24.

Part of various functions implemented by execution of the program by the processor 21 may be implemented by a hardware circuit. In this case, the processor 21 controls functions executed by the hardware circuit.

The ROM 22 is a nonvolatile memory storing a control program, control data, and the like in advance. The control program and the control data stored in the ROM 22 are preinstalled according to specifications of the sorter control device 20.

The RAM 23 is a volatile memory. The RAM 23 temporarily stores data being processed by the processor 21 and the like. The RAM 23 stores various application programs based on a command from the processor 21. The RAM 23 may also store data necessary for execution of application programs and execution results of the application programs.

The NVM 24 is a nonvolatile memory to which data is writable and rewritable. The NVM 24 is formed of, for example, a HDD, a SSD, or a flash memory. The NVM 24 stores a control program, applications, and various data according to the operation use of the sorter control device 20.

The communication unit 25 is an interface to communicate with the sorting control device 10 and the like. For example, the communication unit 25 is an interface to transmit and receive data to and from the sorting control device 10 and the like via a network. For example, the communication unit 25 is an interface supporting wired or wireless LAN connection.

The sorter interface 26 is an interface to communicate with the sorter 5.

The operating unit 27 receives an input of various operations from the operator. The operating unit 27 transmits a signal indicating an input operation to the processor 21. The operating unit 27 may be formed of a touch panel.

The display unit 28 displays image data from the processor 21. For example, the display unit 28 is formed of a liquid crystal monitor. In a case where the operating unit 27 is formed of a touch panel, the display unit 28 may be formed as one unitary piece with the operating unit 27.

The communication unit 25 and the sorter interface 26 may be formed as one unitary piece.

The processor 21 controls the sorter 5 in accordance with a control signal from the sorting control device 10. For example, the processor 21 causes the sorter 5 to sort predetermined articles to predetermined chutes. For example, the processor 21 pushes the article to the chute at a timing at which the article reaches the chute.

The following is an explanation of the AGV control device 30.

FIG. 5 is a block diagram illustrating a configuration example of the AGV control device 30. As illustrated in FIG. 5, the AGV control device 30 includes a processor 31, a ROM 32, a RAM 33, a NVM 34, a communication unit 35, an AGV interface 36, an operating unit 37, a display unit 38, and the like.

The processor 31, the ROM 32, the RAM 33, the NVM 34, the AGV interface 36, the communication unit 35, the operating unit 37, and the display unit 38 are mutually connected via a data bus or the like.

The AGV control device 30 may include any necessary constituent elements in addition to those illustrated in FIG. 5, or any specific constituent elements may be excluded from the AGV control device 30.

The processor 31 has a function of controlling operations of the whole AGV control device 30. The processor 31 may include an internal cache and various interfaces. The processor 31 implements various types of processing by executing a program stored in advance in an internal memory, the ROM 32 or the NVM 34.

Part of various functions implemented by execution of the program by the processor 31 may be implemented by a hardware circuit. In this case, the processor 31 controls functions executed by the hardware circuit.

The ROM 32 is a nonvolatile memory storing a control program, control data, and the like in advance. The control program and the control data stored in the ROM 32 are preinstalled according to specifications of the AGV control device 30.

The RAM 33 is a volatile memory. The RAM 33 temporarily stores data being processed by the processor 31 and the like. The RAM 33 stores various application programs based on a command from the processor 31. The RAM 33 may also store data necessary for execution of application programs and execution results of the application programs.

The NVM 34 is a nonvolatile memory to which data is writable and rewritable. The NVM 34 is formed of, for example, a HDD, a SSD, or a flash memory. The NVM 34 stores a control program, applications, and various data according to the operation use of the AGV control device 30.

The communication unit 35 is an interface to communicate with the sorting control device 10 and the like. For example, the communication unit 35 is an interface to transmit and receive data to and from the sorting control device 10 and the like via a network. For example, the communication unit 35 is an interface supporting wired or wireless LAN connection.

The AGV interface 36 is an interface to communicate with the AGV 7. The AGV interface 36 is connected to the AGV 7 in a wireless manner. For example, the AGV interface 36 may support wireless LAN connection.

The operating unit 37 receives an input of various operations from the operator. The operating unit 37 transmits a signal indicating an input operation to the processor 31. The operating unit 37 may be formed of a touch panel.

The display unit 38 displays image data from the processor 31. For example, the display unit 38 is formed of a liquid crystal monitor. In a case where the operating unit 37 is formed of a touch panel, the display unit 38 may be formed as one unitary piece with the operating unit 37.

The communication unit 35 and the AGV interface 36 may be formed as one unitary piece.

The processor 31 controls the AGV 7 in accordance with a control signal from the sorting control device 10. For example, the processor 31 causes the AGV 7 to move to a receiving position. In addition, the processor 31 causes the AGV 7 in a state of being loaded with articles to move to a position in which the AGV 7 can feed the articles to the first vessel 8 or the second vessel 9. In addition, the processor 31 causes the AGV 7 to feed the articles to the first vessel 8 or the second vessel 9.

The following is an explanation of the AGV 7.

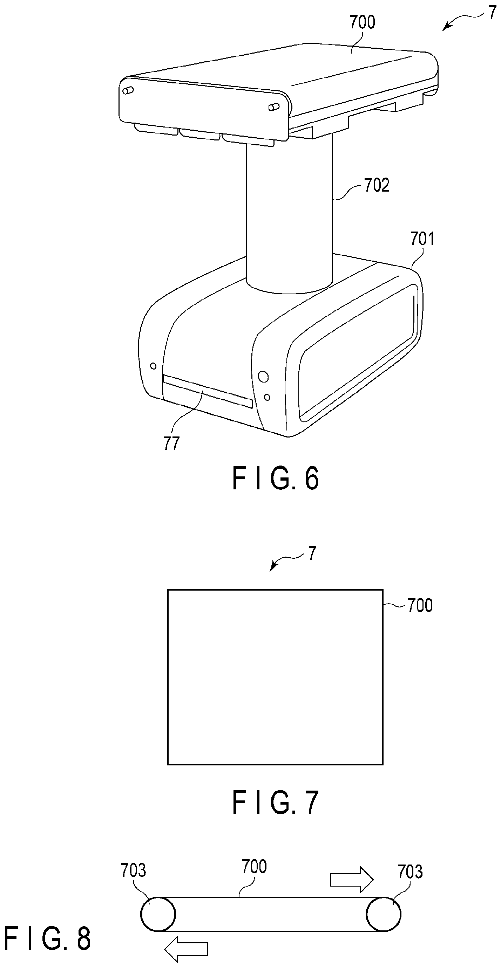

FIG. 6 is a perspective view of the AGV 7. FIG. 7 is a top view of the AGV 7.

The AGV 7 includes a base 701. The base 701 functions as a moving mechanism moving a cross belt 700 described later. A sensor 77 is formed on a front surface of the base 701. The sensor 77 will be described later.

The base 701 is also provided with a member 702 extending toward an upper part. The cross belt 700 is formed at an upper end of the member 702.

FIG. 8 is a side view of the cross belt 700.

The cross belt 700 (loading mechanism) is formed of a band-shaped belt formed in an annular shape. Rollers 703 are formed inside the cross belt 700. The cross belt 700 is supported in a state of being stretched with predetermined tension by the rollers 703.

The cross belt 700 is rotated by drive by the rollers 703 or the like. In this example, the cross belt 700 is formed of a belt. The cross belt 700 may be formed of two or more belts.

The following is an explanation of a control system of the AGV 7.

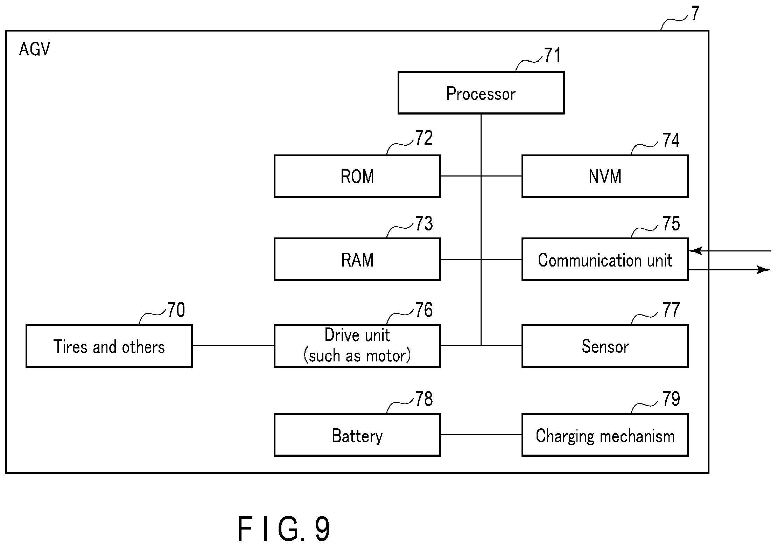

FIG. 9 is a block diagram illustrating a configuration example of the AGV 7. The AGV 7 includes a processor 71, a ROM 72, a RAM 73, a NVM 74, a communication unit 75, a drive unit 76, a sensor 77, a battery 78, a charging mechanism 79, tires 70, and the like.

The AGV 7 may include any necessary constituent elements in addition to those illustrated in FIG. 9, or any specific constituent elements may be excluded from the AGV 7.

The processor 71 has a function of controlling operations of the whole AGV 7. The processor 71 may include an internal cache and various interfaces. The processor 71 implements various types of processing by executing a program stored in advance in an internal memory, the ROM 72 or the NVM 74.

For example, the processor 71 is a CPU (Central Processing Unit). The processor 71 may be implemented by hardware, such as a LSI (Large Scale Integration), an ASIC (Application Specific Integrated Circuit), or a FPGA (Field-Programmable Gate Array).

The ROM 72 is a non-transitory computer-readable storage medium, and stores the program described above. The ROM 72 also stores data or various set values used in execution of various types of processing by the processor 71. The RAM 73 is a memory used for reading/writing data. The RAM 73 is used as a so-called work area or the like storing data temporarily used in execution of various types of processing by the processor 71.

The NVM 74 is a non-transitory computer-readable storage medium, and stores the program in some cases. The NVM 74 stores data used in execution of various types of processing by the processor 71 and data or various set values generated by processing in the processor 71.

The communication unit 75 is an interface to transmit and receive data to and from the AGV control device 30 and the like via a wireless LAN access point or the like. For example, the communication unit 75 supports wireless LAN connection.

The drive unit 76 is a motor or the like, and rotates or stops the motor based on a drive signal output from the processor 71. The power of the motor is transmitted to the tires 70 moving the base 701, and transmitted to a steering mechanism. By such a power from the motor, the AGV 7 moves to the target position.

The power of the motor is also transmitted to the rollers 703. By such a power from the motor, the cross belt 700 is rotated to feed the articles to the first vessel 8 or the second vessel 9.

The drive unit 76 may be formed of a motor to drive the tires 70 and a motor to drive the cross belt 700.

The sensor 77 is formed of a plurality of reflection sensors. The reflection sensors are attached on the periphery of the AGV 7. Each of the reflection sensors emits laser light, detects time from emission of the laser light to return of the laser light reflected by an object, detects a distance to the object based on the detected time, and notifies the processor 71 of a detection signal. Based on the detection signal from the sensor 77, the processor 71 outputs a control signal controlling traveling of the AGV 7. For example, the processor 71 outputs a control signal for deceleration or stop to avoid a collision with the object, based on the detection signal from the sensor 77. In addition to the sensor 77, the AGV 7 may include a camera, and the camera may photograph the surroundings and output the photographed image to the processor 71. In this case, the processor 71 analyzes the photographed image, and outputs a control signal for deceleration or stop to avoid a collision with the object.

The battery 78 supplies electric power necessary for the drive unit 76 and the like. The charging mechanism 79 is a mechanism connecting a charging station to the battery 78, and the battery 78 is charged with electric power supplied from the charging station or the like via the charging mechanism 79.

The processor 71 executes processing, such as arithmetic operations and control necessary for operations, such as acceleration, deceleration, stop, a change of direction, and rotation of the cross belt 700. The processor 71 executes the program stored in the ROM 72 or the NVM 74 or the like based on a control signal from the AGV control device 30 or the like, to generate a drive signal and output the drive signal to the units.

For example, the AGV control device 30 transmits a control signal to move the AGV 7 to the receiving position. In addition, the AGV control device 30 transmits a control signal to move the AGV 7 to the feeding position. The AGV control device 30 also transmits a control signal to rotate the cross belt 700.

The processor 71 of the AGV 7 outputs a drive signal corresponding to the control signal transmitted from the AGV control device 30. In this manner, the AGV 7 moves from the current position to the receiving position. In response to reception of an article from the sorter 5 at the receiving position, the AGV 7 moves to the feeding position in a state of being loaded with the article. The AGV 7 feeds the article to the first vessel 8 or the second vessel 9 in the feeding position.

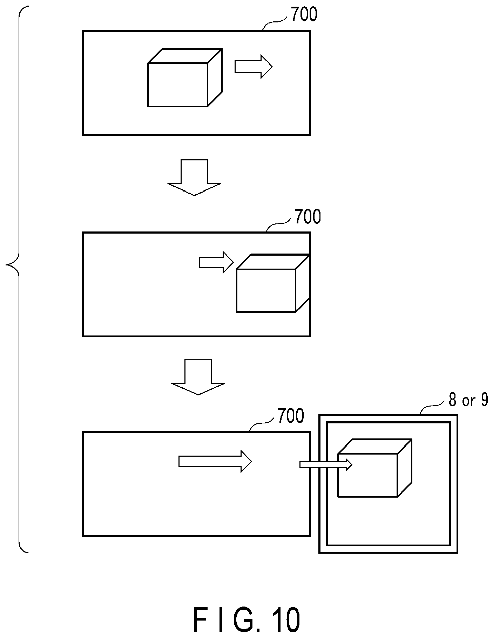

FIG. 10 illustrates an operation example in which the AGV 7 feeds an article to the first vessel 8 or the second vessel 9. As illustrated in FIG. 10, the AGV 7 rotates the cross belt 700 in a state in which the cross belt 700 is loaded with an article. The AGV 7 feeds the article from an end of the cross belt 700 to the first vessel 8 or the second vessel 9 by rotation of the cross belt 700.

The first vessel 8 will be explained hereinafter.

In this example, the sorting system 100 includes one or both of two types of first vessels 8.

The first vessel 8 of one type will be explained hereinafter.

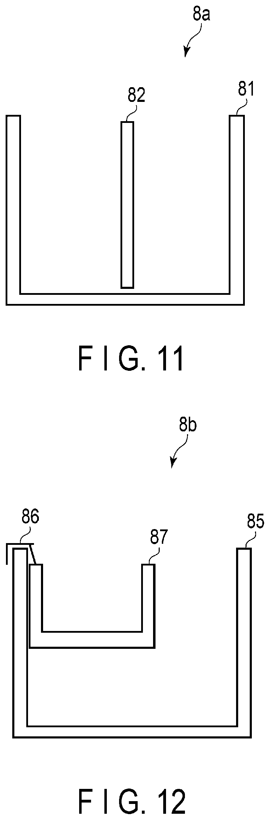

FIG. 11 illustrates a cross-sectional view of a first vessel 8a serving as the first vessel 8 of one type. As illustrated in FIG. 11, the first vessel 8a includes an outer layer 81.

The outer layer 81 is formed in a rectangular parallelepiped shape. The outer layer 81 has a hollow inside and has an opened top. The outer layer 81 may have a structure in which part of side walls is also opened. For example, the outer layer 81 is a cage or the like.

A partition plate 82 is formed inside the outer layer 81.

The partition plate 82 divides the outer layer 81 into two regions. For example, one region is fed with articles from the sorter 5. The other region is fed with articles from the AGV 7.

The first vessel 8 of the other type will be explained hereinafter.

FIG. 11 illustrates a cross-sectional view of a first vessel 8b serving as the first vessel 8 of the other type. As illustrated in FIG. 11, the first vessel 8b includes an outer layer 85.

The outer layer 85 is formed in a rectangular parallelepiped shape. The outer layer 85 has a hollow inside and has an opened top. The outer layer 85 may have a structure in which part of side walls is also opened. For example, the outer layer 85 is a cage or the like.

The outer layer 85 may have the same structure as that of the outer layer 81.

A folding container 87 is formed inside the outer layer 85.

The folding container 87 is fixed on one side of the outer layer 85 with a folder 86. The folding container 87 is formed in a rectangular parallelepiped shape. The folding container 87 has a hollow inside and has an opened top.

For example, the folding container 87 is a cage, a tray, or the like.

The folding container 87 is fed with articles from the sorter 5. The outer layer 85 is fed with articles from the AGV 7.

The following is an explanation of a placement example of the first vessel 8b.

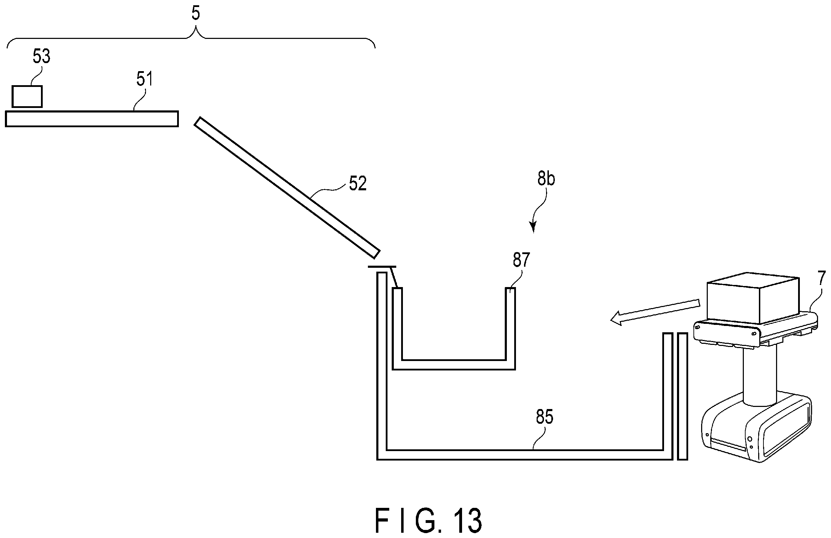

FIG. 13 illustrates a placement example of the first vessel 8b. FIG. 13 is a cross-sectional view of the sorter 5 and the first vessel 8b. In FIG. 13, the sorter 5 conveys articles in a direction perpendicular to the drawing.

The sorter 5 includes a plurality of trays 51, a plurality of chutes 52, and a plurality of pushers 53.

The trays 51 are formed in line in the direction perpendicular to the drawing. Each of the trays 51 is loaded with an article. The trays 51 move in the direction perpendicular to the drawing.

The chutes 52 are formed in line in the direction perpendicular to the drawing. Each of the chutes 52 is a conveyance path through which an article pushed out of the tray 51 passes. Each of the chutes 52 is formed to extend downward from the tray 51.

Each of the pushers 53 (feeding mechanism) pushes out an article placed on the tray 51 toward the chute 52. Each of the pushers 53 is pushed out toward the chute 52 by an operation of the drive unit or the like. By pushing out the pusher 53, the article placed on the tray 51 is pushed out toward the chute 52.

Each of the pushers 53 push the article to the specific chute according to the sorting destination of the article. Each of the pushers 53 is positioned in a direction opposite to a direction of pushing the article and before a position in which the induction 4 places the article on the tray 51.

The first vessel 8b is placed at a terminal of the chute 52. The first vessel 8b is placed in an orientation in which the folding container 87 is formed on the chute 52 side. In this manner, the folding container 87 of the first vessel 8b receives an article passing through the chute 52.

In addition, in the outer layer 85, part of a side surface opposed to the side surface on which the folding container 87 is formed is opened. In this manner, the outer layer 85 receives an article from the AGV 7.

The sorter 5 will be explained hereinafter.

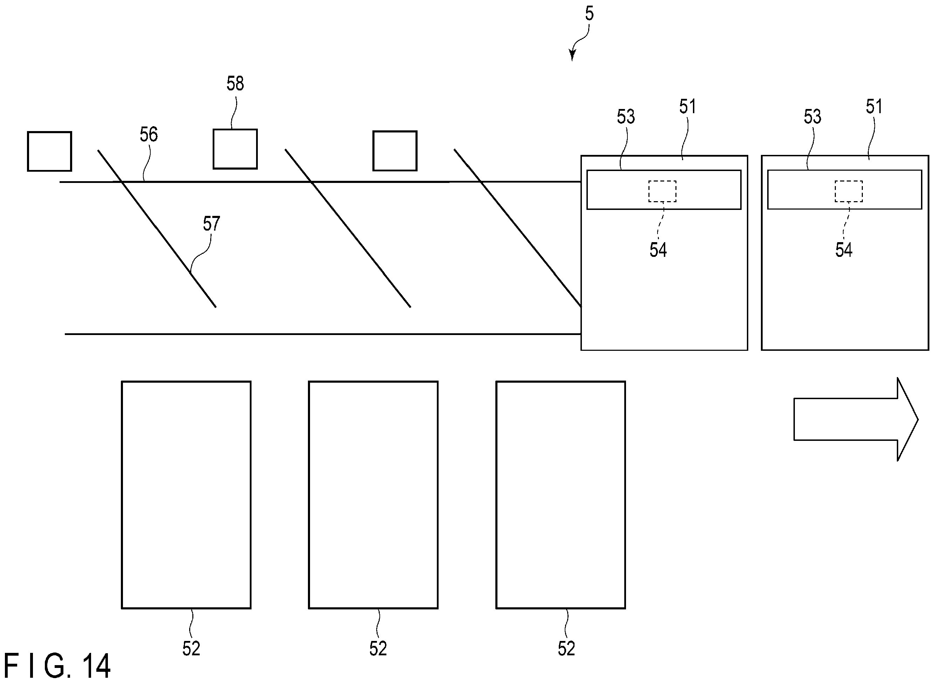

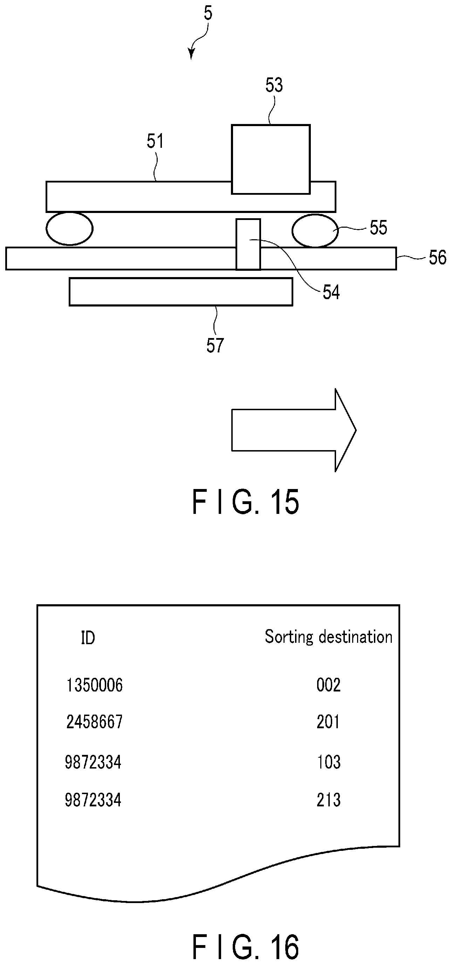

FIG. 14 is a top view of the sorter 5. FIG. 15 is a side view of the sorter 5.

The pushers 53 are formed at one ends of the respective trays 51. Each of the pushers 53 is formed in a rectangular bar shape. Each of the pushers 53 is formed movable in the tray 51 in a direction orthogonal to a direction in which the pusher 53 extends.

Each of the pushers 53 is provided with a projection 54 extending downward.

Each of the projections 54 is movable upward and downward. Each of the projections 54 is retained upward with a spring or the like.

A lower end of each of the projections 54 is provided with a depression in a lateral direction.

Rollers 55 are formed on a bottom part of each of the trays 51.

The sorter 5 includes a rail 56. The rail 56 is formed in a straight line in a predetermined direction. The rollers 55 are placed on the rail 56.

Guides 57 are formed under the rail 56 for the respective chutes 52. The guides 57 are formed slantly with respect to the direction in which the rail 56 extends. The guides 57 are fixed on the rail 56. Each of the guides 57 has a shape engaged with the depression of the projection 54 .

Solenoids 58 are formed in positions corresponding to the respective chutes 52 with the rail 56 interposed therebetween. Each of the solenoids 58 pushes out the projection 54 of the passing tray 51 downward.

The following is an operation example of the sorter 5.

Each of the trays 51 moves in an arrow direction (right direction in FIG. 14 and FIG. 15) along the rail 56. In response to passage of the tray 51 through the predetermined solenoid 58, the solenoid 58 pushes out the projection 54 of the tray 51 downward.

In response to pushing of the projection 54 downward, the depression of the projection 54 is engaged with the guide 57. In response to traveling of the tray 51 in a state in which the depression of the projection 54 is engaged with the guide 57, the projection 54 moves toward the chute 52. With movement of the projection 54, the pusher 53 also moves toward the chute 52.

By movement of the pusher 53 toward the chute 52, the article placed on the tray 51 is fed to the chute 52.

In response to movement of the projection 54 to the terminal of the guide 57, the projection 54 is disengaged from the guide 57 and returns to an upper position.

The following is an explanation of functions implemented by the sorting control device 10. The functions implemented by the sorting control device 10 are implemented by execution of the program stored in the internal memory, the ROM 12, the NVM 14, or the like by the processor 11.

First, the processor 11 has a function of acquiring sorting destination information.

As described above, the sorting destination information indicates the sorting destinations of the articles.

FIG. 16 illustrates a structure example of the sorting destination information. As illustrated in FIG. 16, the sorting destination information stores records associating "ID" with "sorting destination".

The element "ID" is an identifier specifying the article serving as the sorting target. In this example, the element "ID" is a numerical value.

The element "sorting destination" indicates the sorting destination of the corresponding article. The element "sorting destination" corresponds to the first vessel 8 or the second vessel 9 (sorting vessel). Specifically, the element "sorting destination" is information enabling the processor 11 of the sorting control device 10 to specify the sorting vessel to be fed with the article.

For example, the element "sorting destination" is an identifier specifying the first vessel 8 or the second vessel 9. As another example, the element "sorting destination" may be an address (or part of address).

The structure of the sorting destination information is not limited to a specific structure.

The processor 11 receives the sorting destination information from the host device 6 via the communication unit 15. The processor 11 may transmit a request to request sorting destination information to the host device 6 via the communication unit 15.

The processor 11 also has a function of reading the ID from an article.

In this example, suppose that the feeding device 1 is fed with articles serving as sorting targets.

The processor 11 supplies the articles from the feeding device 1 to the singulator 2. The processor 11 aligns the articles in the predetermined direction using the singulator 2. The processor 11 reads IDs from the articles aligned in the predetermined direction using the scanner 3.

The processor 11 may acquire IDs of the articles from the scanner 3. As another example, the processor 11 may acquire images from the scanner 3, and acquire IDs by decoding codes in the images.

The processor 11 also has a function of specifying the sorting vessels to be fed with the articles.

In response to acquisition of IDs of the articles, the processor 11 acquires the "sorting destination" corresponding to the acquired "ID", with reference to the sorting destination information. In response to acquisition of the "sorting destination", the processor 11 specifies the sorting vessel corresponding to the "sorting destination". Specifically, the processor 11 specifies one of the first vessels 8 or one of the second vessels 9 as the sorting vessel to be fed with the article.

The processor 11 also has a function of feeding the articles to the specified sorting vessels.

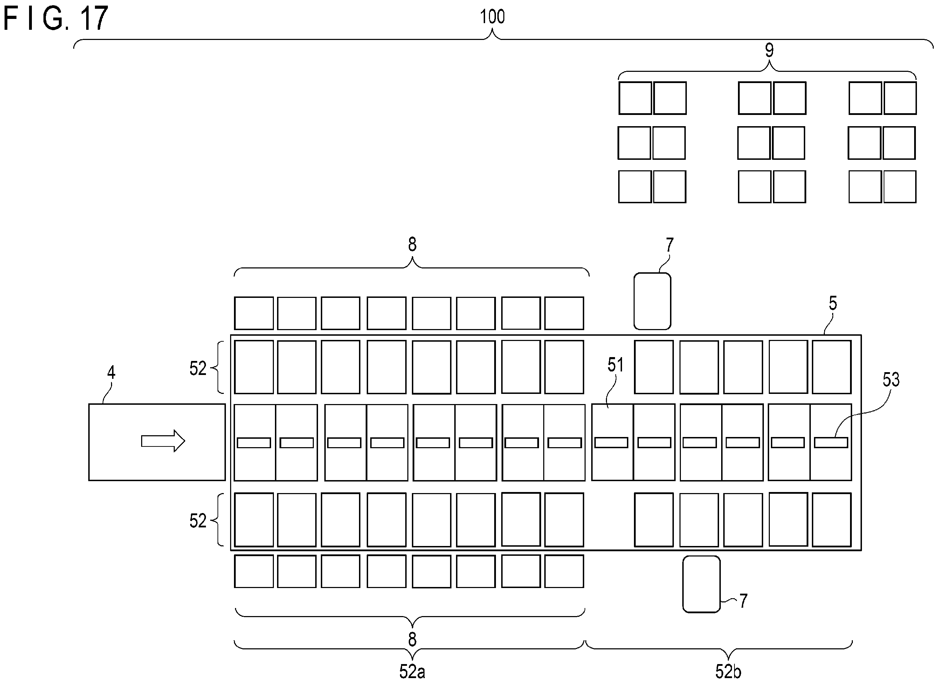

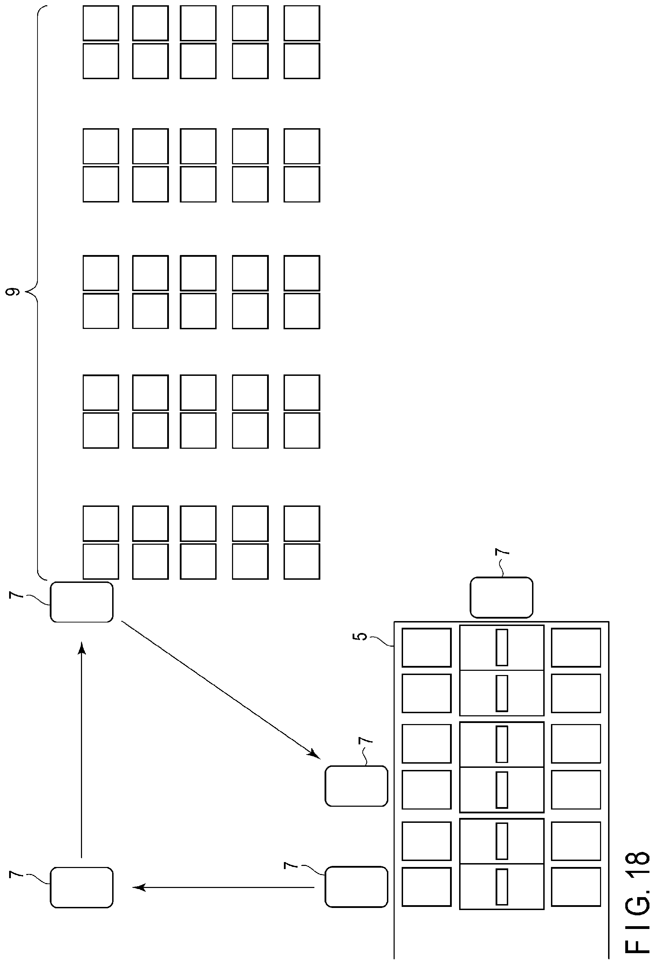

FIG. 17 and FIG. 18 illustrate an operation example in which the processor 11 feeds articles to the sorting vessels.

In this example, the chutes 52 to feed articles to the first vessels 8 are referred to as "fixed sorting chutes 52a". In addition, the chutes 52 to load articles onto the AGV 7 are referred to as "set sorting chutes 52b".

The processor 11 loads articles onto the trays 51 using the induction 4. In this operation, the processor 11 may generate tracking information specifying the trays 51. For example, the tracking information stores the IDs of the articles and IDs specifying the trays 51 in association.

The processor 11 also specifies the chute 52 to be fed with the article in accordance with the specified sorting vessel.

For example, if the specified sorting vessel is one of the first vessels 8, the processor 11 determines whether to feed the article to the first vessel 8 from the sorter 5 or feed the article to the first vessel 8 using the AGV 7.

The processor 11 determines whether to feed the article to the first vessel 8 from the sorter 5 or feed the article to the first vessel 8 using the AGV 7, based on the shape or the weight of the article.

For example, if a length of a side of the article or a weight of the article exceeds a predetermined threshold, the processor 11 determines feeding the article to the first vessel 8 using the AGV 7. Specifically, the processor 11 feeds comparatively small and light articles separately from other articles to the first vessel 8.

In a case where the processor 11 determines feeding the article to the first vessel 8 from the sorter 5, the processor 11 specifies the fixed sorting chute 52a corresponding to the first vessel 8. In a case where the processor 11 specifies the fixed sorting chute 52a, the processor 11 transmits a control signal to cause the sorter 5 to feed the article on the tray 51 to the fixed sorting chute 52a to the sorter control device 20 via the communication unit 15.

The processor 21 of the sorter control device 20 feeds the article on the tray 51 to the fixed sorting chute 52a in accordance with the control signal. For example, at a timing at which the tray 51 reaches the fixed sorting chute 52a, the processor 21 feeds the article from the tray 51 to the fixed sorting chute 52a using the pusher 53. The article passes through the fixed sorting chute 52a and is fed to the first vessel 8.

Each of the pushers 53 pushes out the article to the specific chute according to the sorting destination of the article. Each of the pushers 53 is positioned in a direction opposite to the direction of pushing the article and before a position in which the induction 4 places the article on the tray 51.

If the processor 11 determines feeding the article to the first vessel 8 using the AGV 7, the processor 11 causes the AGV 7 to wait at one of the set sorting chutes 52b. For example, the processor 11 transmits a control signal to move the AGV 7 to the receiving position corresponding to the set sorting chute 52b to the AGV control device 30 via the communication unit 15.

The processor 31 of the AGV control device 30 moves one of the AGVs 7 to the receiving position in accordance with the control signal.

In a case where the processor 11 causes the AGV 7 to wait, the processor 11 transmits a control signal to cause the sorter 5 to feed the article on the tray 51 to the set sorting chute 52b to the sorter control device 20 via the communication unit 15.

The processor 21 of the sorter control device 20 feeds the article on the tray 51 to the set sorting chute 52b in accordance with the control signal. For example, at a timing at which the tray 51 reaches the set sorting chute 52b, the processor 21 feeds the article from the tray 51 to the set sorting chute 52b using the pusher 53. The article passes through the set sorting chute 52b and is loaded onto the AGV 7.

In response to loading of the article onto the AGV 7, the processor 11 transmits a control signal to feed the article to the first vessel 8 to the AGV control device 30 via the communication unit 15.

The processor 31 of the AGV control device 30 moves the AGV 7 to the feeding position of the first vessel 8 in accordance with the control signal. In response to movement of the AGV 7 to the feeding position, the processor 31 rotates the cross belt 700 of the AGV 7 to feed the article to the first vessel 8.

In response to feeding of the article to the first vessel 8, the processor 11 of the sorting control device 10 may transmit a control signal to move the AGV 7 to the receiving position of one of the set sorting chutes 52b to the AGV control device 30.

In addition, if the specified sorting vessel is one of the second vessels 9, the processor 11 causes the AGV 7 to wait at one of the set sorting chutes 52b. For example, the processor 11 transmits a control signal to move the AGV 7 to the receiving position corresponding to the set sorting chute 52b to the AGV control device 30 via the communication unit 15.

The processor 31 of the AGV control device 30 moves one of the AGVs 7 to the receiving position in accordance with the control signal.

In a case where the processor 11 causes the AGV 7 to wait, the processor 11 transmits a control signal (control signal to cause the sorter 5 to feed the article to the AGV 7) to cause the sorter 5 to feed the article on the tray 51 to the set sorting chute 52b to the sorter control device 20 via the communication unit 15.

The processor 21 of the sorter control device 20 feeds the article on the tray 51 to the set sorting chute 52b in accordance with the control signal. For example, at a timing at which the tray 51 reaches the set sorting chute 52b, the processor 21 feeds the article from the tray 51 to the set sorting chute 52b using the pusher 53. The article passes through the set sorting chute 52b and is loaded onto the AGV 7.

In response to loading of the article onto the AGV 7, the processor 11 transmits a control signal to feed the article to the first vessel 8 to the AGV control device 30 via the communication unit 15.

The processor 31 of the AGV control device 30 moves the AGV 7 to the feeding position of the second vessel 9 in accordance with the control signal. In response to movement of the AGV 7 to the feeding position, the processor 31 rotates the cross belt 700 of the AGV 7 to feed the article to the second vessel 9.

In response to feeding of the article to the second vessel 9, the processor 11 of the sorting control device 10 may transmit a control signal to move the AGV 7 to the receiving position of one of the set sorting chutes 52b to the AGV control device 30.

As another example, the processor 11 may cause the AGV 7 to wait at a terminal of the sorter 5. The processor 11 determines whether to load the article from the terminal onto the AGV 7, based on the shape, the weight, or the like of the article. For example, if a length of a side or a weight exceeds a predetermined threshold, the processor 11 determines whether to load the article from the terminal onto the AGV 7. In this example, the predetermined threshold is based on the shape or the weight of the article enabling the pusher 53 to push out the article.

If the processor 11 determines loading the article from the terminal to the AGV 7, the processor 11 causes the AGV 7 to wait at the terminal of the sorter 5.

In this example, the sorter 5 loads the article from the tray 51 onto the AGV 7 at the terminal.

In the same manner, the processor 11 causes the AGV 7 to feed the article to the first vessel 8 or the second vessel 9.

The processor 11 repeats the operation described above to sort the articles of the IDs indicated by the sorting destination information to the first vessel 8 or the second vessel 9.

The processor 11 may determine whether the first vessel 8 is full, after the article is fed to the first vessel 8. If the processor 11 determine that the first vessel 8 is full, the processor 11 instructs the worker to replace the first vessel 8 through the display unit 17.

The following is an explanation of an operation example of the sorting control device 10.

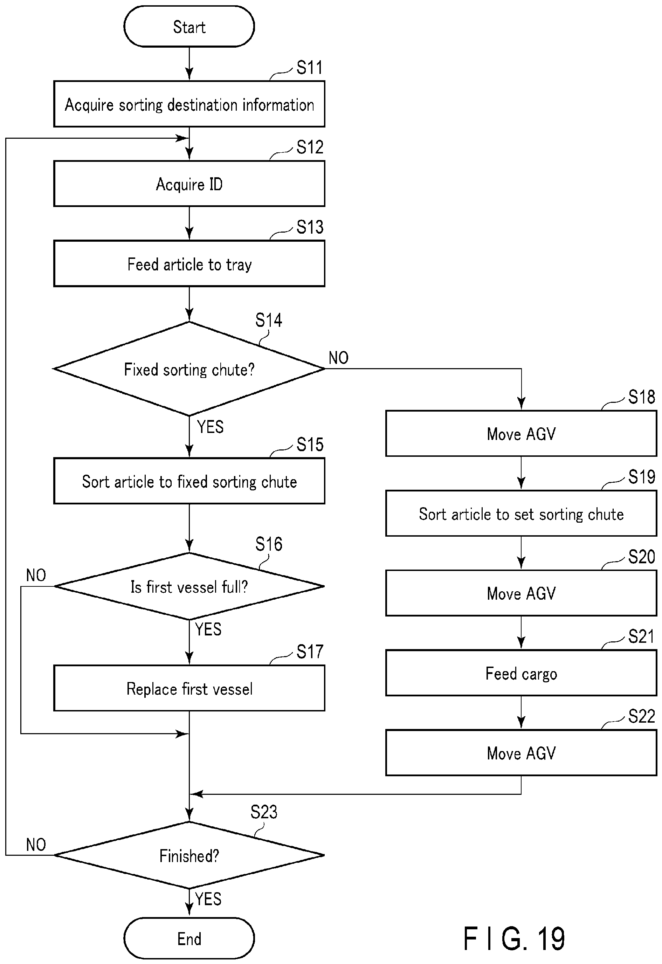

FIG. 19 is a flowchart for explaining an operation example of the sorting control device 10.

First, the processor 11 of the sorting control device 10 acquires sorting destination information from the host device 6 via the communication unit 15 (S11). In response to acquisition of the sorting destination information, the processor 11 reads an ID from the fed article using the scanner 3 (S12) .

In response to reading of the ID from the article, the processor 11 feeds the article to the tray 51 of the sorter 5 using the induction 4 (S13). In response to feeding of the article to the tray 51, the processor 11 determines whether to feed the article to the fixed sorting chute 52a (S14) .

If the processor 11 determines feeding the article to the fixed sorting chute 52a (S14, YES), the processor 11 causes the sorter 5 to feed the article to one of the fixed sorting chutes 52a (S15).

In a case where the processor 11 causes the sorter 5 to feed the article to one of the fixed sorting chutes 52a, the processor 11 determines whether the first vessel 8 fed with the article is full (S16). If the processor 11 determines that the first vessel 8 fed with the article is full (S16, YES), the processor 11 instructs the worker to replace the first vessel 8 through the display unit 17 (S17).

If the processor 11 determines feeding the article to the set sorting chute 52b (or conveying the article to the terminal) (S14, NO), the processor 11 moves the AGV 7 to the receiving position (or terminal of the sorter 5) of the vacant set sorting chute 52b (S18).

In a case where the processor 11 moves the AGV 7 to the receiving position (or terminal of the sorter 5) of the set sorting chute 52b, the processor 11 causes the sorter 5 to feed (convey the article to the terminal) the article to the set sorting chute 52b (S19). In a case where the processor 11 causes the sorter 5 to feed the article to the set sorting chute 52b, the processor 11 moves the AGV 7 to the feeding position of one of the first vessels 8 or one of the second vessels 9 (S20).

In a case where the processor 11 moves the AGV 7 to the feeding position, the processor 11 causes the AGV 7 to feed the cargo to the first vessel 8 or the second vessel 9 (S21). In a case where the processor 11 causes the AGV 7 to feed the cargo to the first vessel 8 or the second vessel 9, the processor 11 moves the AGV 7 to the receiving position of the vacant set sorting chute 52b (S22).

If the processor 11 determines that the first vessel 8 fed with the article is not full (S16, NO), if the processor 11 instructs the worker to replace the first vessel 8 (S17), or if the processor 11 moves the AGV 7 to the receiving position of the vacant set sorting chute 52b (S22), the processor 11 determines whether sorting of the articles of the IDs indicated by the sorting destination information has been finished (S23).

If the processor 11 determines that sorting of the articles of the IDs indicated by the sorting destination information has not been finished (S23, NO), the processor 11 returns to S12.

If the processor 11 determines that sorting of the articles of the IDs indicated by the sorting destination information has been finished (S23, YES), the processor 11 ends the operation.

The processor 11 may cause the AGV 7 to wait in the receiving position of the set sorting chute 52b in advance.

The fixed sorting chutes 52a and the set sorting chutes 52b may be formed in a mixed manner.

In addition, the sorter 5 may supply the article directly from the tray 51 to the first vessel 8 or the AGV 7. Specifically, the sorter 5 may include no chutes 52.

The sorting system configured as described above directly feeds articles to the first vessels using the sorter. In addition, the sorting system loads articles from the sorter onto the AGV, and feeds the articles to the second vessels by the AGV. As a result, even if the number of sorting destinations increases, the sorting system can automatically sort articles using the AGV by increasing the second vessels.

In addition, by setting the first vessel as the sorting destination frequently fed with articles, the sorting system can feed articles to the sorting destination at high speed.

In addition, the sorting system determines whether to use the sorter or use the AGV according to the shape, the weight, or the like of the article to be fed to the first vessel. As a result, the sorting system can separately feed articles that are different in the shape, the weight, or the like thereof to the first vessel. This structure enables the sorting system to prevent breakage of the articles.

Some embodiments of the present invention have been explained, but the embodiments have been presented as examples and are not intended to limit the scope of the invention. These novel embodiments can be carried out in other various forms, and various omissions, replacement, and changes are possible within the range not departing from the gist of the invention. These embodiments and modifications thereof are included in the scope and the gist of the invention, and included in the inventions described in the claims and equivalents thereof.

## Claims

1. A system comprising an information processing device, a sorter, and an automated guided vehicle,
the sorter including:
trays to be loaded with articles; and
a feeding mechanism feeding each of the articles from the trays to a first vessel or the automated guided vehicle,
the automated guided vehicle including:
a loading mechanism to be loaded with the article and feeding the article to a second vessel; and
a moving mechanism moving the loading mechanism,
the information processing device including:
a communication unit communicating with an external device, the sorter, and the automated guided vehicle; and
a processor executing:
acquiring sorting destination information indicating sorting destinations of the articles from the external device via the communication unit;
specifying the first vessel or the second vessel as a sorting vessel to be fed with the article based on the sorting destination information;
transmitting a control signal to cause the sorter to feed the article to the first vessel via the communication unit, if the first vessel is specified; and
transmitting a control signal to cause the sorter to feed the article to the automated guided vehicle via the communication unit, and transmitting a control signal to cause the automated guided vehicle to feed the article to the second vessel via the communication unit, if the second vessel is specified.

2. The system according to claim 1, wherein
the loading mechanism feeds the article to the first vessel, and
if the first vessel is specified, the processor transmits a control signal to cause the sorter to feed the article to the automated guided vehicle, based on a shape or a weight of the article, and transmits a control signal to cause the automated guided vehicle to feed the article to the first vessel via the communication unit.

3. The system according to claim 2, wherein
the first vessel includes an outer layer and a folding container formed inside the outer layer,
the sorter feeds the article to the folding container, and
the loading mechanism feeds the article to the outer layer.

4. The system according to any one of claims 1 to 3, wherein the processor transmits a control signal to move the automated guided vehicle to a position in which the automated guided vehicle is capable of receiving the article from the sorter via the communication unit,-if the second vessel is specified.

5. The system according to any one of claims 1 to 4, wherein the processor transmits a control signal to move the automated guided vehicle to a position in which the automated guided vehicle is capable of receiving the article from the sorter via the communication unit, after the automated guided vehicle feeds the article to the second vessel.

6. The system according to any one of claims 1 to 5, wherein the loading mechanism is formed of a belt, and feeds the article to the second vessel by rotating the belt in a state of being loaded with the article.

7. The system according to any one of claims 1 to 6, further comprising:
a scanner reading an ID of each of the articles, wherein
the processor specifies the first vessel or the second vessel as the sorting vessel to be fed with the article, based on the ID and the sorting destination information.

8. A program to be executed by a processor, the program causing the processor to execute:
a function of acquiring sorting destination information indicating sorting destinations of articles;
specifying a first vessel or a second vessel as a sorting vessel to be fed with the article based on the sorting destination information;
transmitting a control signal to cause the sorter to feed the article to the first vessel, if the first vessel is specified; and
transmitting a control signal to cause the sorter to feed the article to an automated guided vehicle, and transmitting a control signal to cause the automated guided vehicle to feed the article to the second vessel, if the second vessel is specified.
